# EUROPÄISCHE PATENTSCHRIFT

(11) **EP 2 367 883 B1**
(45) Veröffentlichungstag und Bekanntmachung des Hinweises auf die Patenterteilung: **25.07.2018**
(21) Anmeldenummer: 09783812.2
(22) Anmeldetag: 07.10.2009
(51) Int. Cl.: C08L 77/00, C08L 77/06, C08L 77/12, F16L 11/06, F16L 11/04, F16L 9/147

(54) **VERWENDUNG EINER ZUSAMMENSETZUNG FÜR DEN KONTAKT MIT ÜBERKRITISCHEN MEDIEN**
USE OF A COMPOSITION FOR THE CONTACT WITH SUPERCRITICAL MEDIA
UTILISATION D'UNE COMPOSITION POUR LE CONTACT AVEC DES SUBSTANCES SUPERCRITIQUES

(30) Priorität: 01.12.2008 DE 102008044224
(43) Veröffentlichungstag der Anmeldung: 28.09.2011
(73) Patentinhaber: Evonik Degussa GmbH, 45128 Essen (DE)
(72) Erfinder: DOWE, Andreas, 46325 Borken (DE); BEUTH, Reinhard, 45772 Marl (DE); BAUMANN, Franz-Erich, 48249 Dülmen (DE)
(86) Internationale Anmeldenummer: PCT/EP2009/063025
(87) Internationale Veröffentlichungsnummer: WO 2010/063506

(56) Entgegenhaltungen:
- EP-A1- 0 855 431
- EP-A1- 1 300 620
- EP-A1- 1 717 022
- WO-A1-2006/108959
- WO-A2-2008/122743
- DE-A1- 3 914 011
- DE-A1- 4 408 042
- DE-A1- 10 162 968
- DE-A1-102006 038 108
- FR-A1- 2 590 586
- FR-A1- 2 592 655
- US-A- 5 662 975
- US-A1- 2005 165 175
- US-B1- 6 203 920

## Beschreibung

Die vorliegende Erfindung betrifft die Verwendung einer Polyamidformmasse für den Kontakt mit überkritischen Medien, insbesondere dann, wenn sie bei einem Schlauch oder einem Rohr als Material für eine Schicht verwendet wird, die mit dem beförderten überkritischen Medium in Kontakt kommt. In erster Linie handelt es sich hier um Schläuche oder Rohre zur Beförderung von Öl, Erdgas oder überkritischen Medien wie etwa CO₂ oder deren gemeinsamen Transport. Derartige Schläuche oder Rohre können unter Wasser verlegt sein, z. B. offshore, oder aber auf dem Lande.

Bei unterseeischen Leitungen gibt es verschiedene Arten. Dabei handelt es sich einerseits um Leitungen, die entweder in große Meerestiefen abgesenkt oder gegebenenfalls auch im Flachwasser verlegt sind und die zur Beförderung von Rohöl oder Rohgas oder einem anderen derartigen Fluid von einem Sammelpunkt zu einem Ablieferungspunkt verwendet werden können. Andererseits werden derartige Leitungen zur Bereitstellung einer Verbindung zwischen dem Meeresboden, wo sich das Bohrloch befindet, und der Oberfläche, wo im Allgemeinen eine Öl- oder Gasplattform zur Förderung und Weiterleitung installiert ist, verwendet. Bekanntermaßen werden diese Arten von Leitungen in zwei breite Klassen eingeteilt, nämlich in Rohre und in Schläuche. Erstere werden normalerweise aus Stahl hergestellt und können in manchen Fällen mit Beton überzogen sein oder einen thermoplastischen Inliner zum Schutz des Stahls vor Korrosion aufweisen. Sie können in sehr tiefem Wasser verlegt werden. Schläuche bestehen normalerweise aus einer Reihe von Schichten aus thermoplastischen Materialien und Verstärkungsmaterialien wie Stahlgeflechten oder Kunststoffcompositen.

In einem derartigen typischen und gut bekannten Schlauch strömt zu beförderndes Fluid durch einen inneren Querschnitt, der durch eine Kernschicht gebildet werden kann, die häufig als Karkasse bezeichnet wird. Die Innenfläche dieser Kernschicht begrenzt den inneren Querschnitt, während die Außenfläche im Hinblick auf Penetration durch das im inneren Querschnitt strömende Fluid undurchlässig gemacht werden muss. Daher wird an der Außenfläche der Karkasse eine Schicht ausgebildet, die das beförderte Fluid zurückhält. Hierfür wird eine Barrierepolymerschicht verwendet. Diese Schicht verhindert auch das Eindringen von Wasser und dergleichen von außen, das sonst das beförderte Fluid kontaminieren könnte. Für diese Barriereschicht wird in der Regel ein Polyamid (PA) verwendet; häufige Anwendung findet insbesondere ein weichgemachtes PA11 oder PA12. In einer Ausführungsform wird die Barriereschicht auf eine innen liegende Karkasse extrudiert. Nach außen hin sind im mehrschichtigen Schlauch weitere Schichten angeordnet, beispielsweise ein Satz von Schichten aus Verstärkungsbändern sowie eine externe Schutzhülle. Zur Verhinderung von Verschleiß zwischen zwei Stahlbandschichten werden dazwischen sogenannte Antiverschleißbänder angeordnet. Für diese Bänder wird in der Regel ein Polyamid verwendet; hier findet insbesondere ein weichgemachtes PA11 häufige Anwendung. Der innere Aufbau solcher Schläuche ist beispielsweise in der WO 2006/097678A1 beschrieben.

Problematisch ist bei Schläuchen dieses Typs unter anderem, dass sie biegsam sein müssen, damit der Schlauch nach einem Abrollverfahren verlegt werden kann und sich auch unter den am Einsatzort herrschenden Bedingungen ohne Versagen biegt. Dadurch ergibt sich das besondere Problem, dass die Materialien der einzelnen Schichten in einem derartigen Schlauch so gewählt werden müssen, dass sich das gewünschte Flexibilitätsniveau ergibt. Die Schläuche sowie generell auch Rohre müssen eine hohe Temperatur- und Korrosionsbeständigkeit aufweisen, so dass sie eine Standzeit von mehr als 20 Jahren und in einigen Fällen mehr als 25 Jahren aufweisen.

Neue Entwicklungen wie beispielsweise verbesserte Restölgewinnung erfordern, dass die Rohre bzw. Schläuche bzw. ihre Schichten oder ihr Inliner mit überkritischen Medien wie beispielsweise überkritischem CO₂ kompatibel sind. Da überkritische Medien wie CO₂ ein sehr gutes Extraktionsmedium sind, sind die üblicherweise verwendeten weichgemachten Polyamidformmassen unter derartigen Bedingungen ungeeignet. Aufgrund der Extraktion des in der Polyamidformmasse verwendeten Weichmachers verliert die Polyamidschicht ihre hohe Flexibilität und zeigt eine bestimmte Schrumpfung. Die verringerte Flexibilität wirkt sich nachteilig auf die oben beschriebene Leistungsfähigkeit eines Schlauchs aus und die Schrumpfung der Polyamidschicht führt zu einer Längenschrumpfung, was Probleme an den Endanschlussstücken und Endverschlussstücken wie Auszug oder Bruch der Polymerschicht verursachen kann. Die Schrumpfung der Barriere kann auch eine Lücke zu den umgebenden nächsten äußeren Schichten verursachen. Dies kann den Kollapswiderstand der Karkasse verringern und beschränkt daher die maximale Installationstiefe eines derartigen Schlauchs. Wenn andererseits in einer starren Rohrleitung ein Inliner aus einer weichgemachten Polyamidformmasse im Close Fit-Design installiert ist, kann die Schrumpfung den Verlust des engen Sitzes verursachen. Dies führt zu einem beweglichen Inliner, der dann die durch Längenschrumpfung des Inliners verursachte Spannung auf die Endanschlüsse überträgt.

DE4408042 offenbart Manschetten für ein Rohreinfriergerät, die zumindest teilweise aus einem elastomeren Material bestehen, wobei die Manschetten als Mantel eines starren Rohres von flüssigem Kohlendioxid durchströmt werden.

Die Aufgabe der vorliegenden Erfindung besteht darin, diese Nachteile zu vermeiden und eine Polyamidformmasse beispielsweise für die Herstellung von flexiblen Schläuchen sowie für Inliner von starren Rohrleitungen zur Verfügung zu stellen, welche einerseits die guten mechanischen Eigenschaften der üblicherweise verwendeten Materialien auf Basis von Polyamid besitzt und die andererseits auch eine gute Verträglichkeit mit überkritischen Medien wie beispielsweise überkritischem CO₂ aufweist. Mit Verträglichkeit ist hier das weitgehende Beibehalten der Eigenschaften, insbesondere der Flexibilität, und das Beibehalten der Dimension trotz Einwirken eines extrahierenden Mediums gemeint.

Diese und weitere aus den Anmeldungsunterlagen ersichtliche Aufgaben werden gelöst durch die Verwendung eines Schlauchs oder Rohrs, deren innere Thermoplastschicht, die mit dem geförderten Medium in Kontakt steht, aus einer Formmasse besteht, die zu mindestens 50 Gew.-%, bevorzugt zu mindestens 60 Gew.-%, besonders bevorzugt zu mindestens 70 Gew.-% und insbesondere bevorzugt zu mindestens 80 Gew.-% folgende Bestandteile enthält:
a) 0 bis 99 Gew.-Teile, bevorzugt 4 bis 96 Gew.-Teile, besonders bevorzugt 10 bis 90 Gew.-Teile, insbesondere bevorzugt 20 bis 85 Gew.-Teile und ganz besonders bevorzugt 30 bis 80 Gew.-Teile bzw. 40 bis 75 Gew.-Teile Polyamid sowie
b) 1 bis 100 Gew.-Teile, bevorzugt 4 bis 96 Gew.-Teile, besonders bevorzugt 10 bis 90 Gew.-Teile, insbesondere bevorzugt 15 bis 80 Gew.-Teile und ganz besonders bevorzugt 20 bis 70 Gew.-Teile bzw. 25 bis 60 Gew.-Teile Polyamidelastomer, ausgewählt aus der Gruppe Polyetheresteramid, Polyetheramid und Gemische hieraus,
wobei die Summe der Gewichtsteile 100 ergibt und wobei die Formmasse 0 bis 9 Gew.-% Weichmacher enthält.

Die erfindungsgemäß verwendeten Schläuche der oben beschriebenen Art haben vorzugsweise einen Außendurchmesser von 30 bis 850 mm, besonders bevorzugt von 32 bis 750 mm und insbesondere bevorzugt von 50 bis 650 mm, während die erfindungsgemäß verwendeten Rohre vorzugsweise einen Außendurchmesser von 30 bis 1100 mm, besonders bevorzugt von 32 bis 1000 mm, insbesondere bevorzugt von 50 bis 900 mm und ganz besonders bevorzugt von 50 bis 700 mm besitzen.

Das Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA46, PA6, PA66 oder Copolyamide auf dieser Basis mit Einheiten, die sich von Terephthalsäure und/oder Isophthalsäure herleiten (im Allgemeinen als PPA bezeichnet). In einer bevorzugten Ausführungsform enthalten die Monomereinheiten im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mitverwendet werden können.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA12/PA1012, PA12/PA1212, PA612/PA12, PA613/PA12, PA1014/PA12 und PA610/PA12 sowie entsprechende Blends mit PA11 aufgeführt. Im Zweifelsfall können verträgliche Kombinationen durch Routineversuche ermittelt werden.

Polyetheresteramide sind z. B. aus der DE-A-25 23 991 und der DE-A-27 12 987 bekannt; sie enthalten als Comonomer ein Polyetherdiol. Polyetheramide sind beispielsweise aus der DE-A-30 06 961 bekannt; sie enthalten als Comonomer ein Polyetherdiamin.

Beim Polyetherdiol bzw. dem Polyetherdiamin kann die Polyethereinheit beispielsweise auf 1.2-Ethandiol, 1.2-Propandiol, 1.3-Propandiol, 1.4-Butandiol oder 1.3-Butandiol basieren. Die Polyethereinheit kann auch gemischt aufgebaut sein, etwa mit statistischer oder blockweiser Verteilung der von den Diolen herrührenden Einheiten. Das Gewichtsmittel der Molmasse der Polyetherdiole bzw. Polyetherdiamine liegt bei 200 bis 5000 g/mol und vorzugsweise bei 400 bis 3000 g/mol; ihr Anteil am Polyetheresteramid bzw. Polyetheramid beträgt bevorzugt 4 bis 60 Gew.-% und besonders bevorzugt 10 bis 50 Gew.-%. Geeignete Polyetherdiamine sind durch Konversion der entsprechenden Polyetherdiole durch reduktive Aminierung oder Kupplung an Acrylnitril mit nachfolgender Hydrierung zugänglich; sie sind z. B. in Form der JEFFAMIN® D-oder ED-Typen oder der ELASTAMINE®-Typen bei der Huntsman Corp. oder in Form der Polyetheramin D-Reihe bei der BASF SE kommerziell erhältlich. In geringeren Mengen kann auch ein Polyethertriamin mit verwendet werden, z. B. ein JEFFAMIN® T-Typ, falls ein verzweigtes Polyetheramid eingesetzt werden soll. Vorzugsweise setzt man Polyetherdiamine bzw. Polyethertriamine ein, die pro Ethersauerstoffatom im Mittel mindestens 2,3 Kohlenstoffatome in der Kette enthalten.

Neben Polyamid kann die Formmasse weitere Komponenten enthalten wie z.B. Schlagzähmodifikatoren, andere Thermoplaste und andere übliche Zusatzstoffe. Erforderlich ist nur, dass das Polyamid die Matrix der Formmasse bildet.

Geeignete Schlagzähmodifikatoren sind beispielsweise Ethylen/a-Olefin-Copolymere, vorzugsweise ausgewählt aus
a) Ethylen/C₃- bis C₁₂-α-Olefin-Copolymeren mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind Ethylen-Propylen-Kautschuk sowie LLDPE und VLDPE.
b) Ethylen/C₃- bis C₁₂-α-Olefin/unkonjugiertes Dien-Terpolymeren mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder 5-Ethylidennorbornen. Als C₃- bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere, beispielsweise mit Hilfe eines Ziegler-Natta-Katalysators, ist Stand der Technik.

Andere geeignete Schlagzähmodifikatoren sind Styrol-Ethylen/Butylen-Blockcopolymere. Hierbei werden vorzugsweise Styrol-Ethylen/Butylen-Styrol-Blockcopolymere (SEBS) eingesetzt, die durch Hydrierung von Styrol-Butadien-Styrol-Blockcopolymeren erhältlich sind. Es können aber auch Diblocksysteme (SEB) oder Multiblocksysteme verwendet werden. Derartige Blockcopolymere sind Stand der Technik.

Diese Schlagzähmodifikatoren enthalten vorzugsweise Säureanhydridgruppen, die auf bekannte Weise durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Geeignete Reagenzien sind beispielsweise Maleinsäure, Maleinsäureanhydrid, Maleinsäuremonobutylester, Fumarsäure, Citraconsäureanhydrid, Aconitsäure oder Itaconsäureanhydrid. Auf diese Weise sind vorzugsweise 0,1 bis 4 Gew.-% eines ungesättigten Anhydrids an den Schlagzähmodifikator aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden.

Andere geeignete Schlagzähmodifikatoren sind Copolymere, die Einheiten der folgenden

Monomere enthalten:
a) 20 bis 94,5 Gew.-% eines oder mehrerer α-Olefine mit 2 bis 12 C-Atomen,
b) 5 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C1- bis C12-Alkohol, die gegebenenfalls eine freie Hydroxyl- oder Epoxidfunktion tragen können,
   - Acrylnitril bzw. Methacrylnitril,
   - Acrylamiden bzw. Methacrylamiden,
c) 0,5 bis 50 Gew.-% eines olefinisch ungesättigten Epoxids, Carbonsäureanhydrids, Carbonsäureimids, Oxazolins oder Oxazinons.

Dieses Copolymere ist beispielsweise aus folgenden Monomeren zusammengesetzt, wobei diese Aufzählung nicht erschöpfend ist:
a) α-Olefine wie beispielsweise Ethylen, Propen, 1-Buten, 1-Penten, 1-Hexen, 1-Octen, 1-Decen oder 1-Dodecen;
b) Acrylsäure, Methacrylsäure oder deren Salze, beispielsweise mit Na^{⊕} oder Zn^{2⊕} als Gegenion; Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, n-Propylmethacrylat, n-Butylmethacrylat, Isobutylmethacrylat, 2-Ethylhexylmethacrylat, Hydroxyethylacrylat, 4-Hydroxybutylmethacrylat, Glycidylacrylat, Glycidylmethacrylat, Acrylnitril, Methacrylnitril, Acrylamid, N-Methylacrylamid, N,N-Dimethylacrylamid, N-Ethylacrylamid, N-Hydroxyethylacrylamid, N-Propylacrylamid, N-Butylacrylamid, N-(2-Ethylhexyl)acrylamid, Methacrylamid, N-Methylmethacrylamid, N,N-Dimethylmethacrylamid, N-Ethylmethacrylamid, N-Hydroxyethylmethacrylamid, N-Propylmethacrylamid, N-Butylmethacrylamid, N,N-Dibutylmethacrylamid, N-(2-Ethylhexyl)methacrylamid;
c) Vinyloxiran, Allyloxiran, Glycidylacrylat, Glycidylmethacrylat, Maleinsäureanhydrid, Aconitsäureanhydrid, Itaconsäureanhydrid, ferner die aus diesen Anhydriden durch Reaktion mit Wasser entstehenden Dicarbonsäuren; Maleinimid, N-Methylmaleinimid, N-Ethylmaleinimid, N-Butylmaleinimid, N-Phenylmaleinimid, Aconitsäureimid, N-Methylaconitsäureimid, N-Phenylaconitsäureimid, Itaconsäureimid, N-Methylitaconsäureimid, N-Phenylitaconsäureimid, N-Acryloylcaprolactam, N-Methacryloylcaprolactam, N-Acryloyllaurinlactam, N-Methacryloyllaurinlactam, Vinyloxazolin, Isopropenyloxazolin, Allyloxazolin, Vinyloxazinon oder Isopropenyloxazinon.

Bei einer Verwendung von Glycidylacrylat oder Glycidylmethacrylat fungieren diese gleichzeitig auch als acrylische Verbindung b), so dass bei ausreichender Menge des Glycidyl(meth)acrylats keine weitere acrylische Verbindung enthalten zu sein braucht. In dieser speziellen Ausführungsform enthält das Copolymere Einheiten der folgenden Monomere:
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C₁- bis C₁₂-Alkohol,
   - Acrylnitril bzw. Methacrylnitril,
   - Acrylamiden bzw. Methacrylamiden
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

Das Copolymere kann in kleiner Menge weitere einpolymerisierte Monomere enthalten, sofern diese die Eigenschaften nicht nennenswert beeinträchtigen, wie beispielsweise Maleinsäuredimethylester, Fumarsäuredibutylester, Itaconsäurediethylester oder Styrol.

Die Herstellung derartiger Copolymerer ist Stand der Technik. Eine Vielzahl verschiedener Typen hiervon ist als Handelsprodukt erhältlich, beispielsweise unter der Bezeichnung LOTADER® (Arkema; Ethylen/Acrylat/Terkomponente bzw. Ethylen/Glycidylmethacrylat).

In einer bevorzugten Ausführungsform enthält die Formmasse hierbei folgende Komponenten:
1. 60 bis 96,5 Gew.-Teile des Polyamids,
2. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen- Blockcopolymeren,
3. 0,5 bis 20 Gew.-Teile eines Copolymeren, das Einheiten der folgenden Monomere enthält:
   a) 20 bis 94,5 Gew.-% eines oder mehrerer α-Olefine mit 2 bis 12 C-Atomen,
   b) 5 bis 79,5 Gew.-% einer oder mehrerer acrylischer Verbindungen, ausgewählt aus
      - Acrylsäure bzw. Methacrylsäure bzw. deren Salzen,
      - Estern von Acrylsäure bzw. Methacrylsäure mit einem C₁- bis C₁₂-Alkohol, die gegebenenfalls eine freie Hydroxyl- oder Epoxidfunktion tragen können,
      - Acrylnitril bzw. Methacrylnitril,
      - Acrylamiden bzw. Methacrylamiden,
   c) 0,5 bis 50 Gew.-% eines olefinisch ungesättigten Epoxids, Carbonsäureanhydrids, Carbonsäureimids, Oxazolins oder Oxazinons,
wobei die Summe der Gewichtsteile der Komponenten gemäß 1., 2. und 3. 100 beträgt.

In einer weiteren bevorzugten Ausführungsform enthält die Formmasse hierbei:
1. 65 bis 90 Gew.-Teile und besonders bevorzugt 70 bis 85 Gew.-Teile des Polyamids,
2. 5 bis 30 Gew.-Teile, besonders bevorzugt 6 bis 25 Gew.-Teile und insbesondere bevorzugt 7 bis 20 Gew.-Teile der Schlagzähkomponente,
3. 0,6 bis 15 Gew.-Teile und besonders bevorzugt 0,7 bis 10 Gew.-Teile des Copolymeren, welches bevorzugt Einheiten der folgenden Monomere enthält:
   a) 30 bis 80 Gew.-% α-Olefin(e),
   b) 7 bis 70 Gew.-% und besonders bevorzugt 10 bis 60 Gew.-% der acrylischen Verbindung(en),
   c) 1 bis 40 Gew.-% und besonders bevorzugt 5 bis 30 Gew.-% des olefinisch ungesättigten Epoxids, Carbonsäureanhydrids, Carbonsäureimids, Oxazolins oder Oxazinons.

Auch hier beträgt die Summe der Gewichtsteile der Komponenten gemäß 1., 2. und 3. 100.

Als Schlagzähkomponente kann darüber hinaus auch Nitrilkautschuk (NBR) oder hydrierter Nitrilkautschuk (H-NBR), die gegebenenfalls funktionelle Gruppen enthalten, verwendet werden. Entsprechende Formmassen sind in der US2003/0220449A1 beschrieben.

Andere Thermoplaste, die in der Formmasse enthalten sein können, sind in erster Linie Polyolefine. Sie können in einer Ausführungsform, wie weiter oben bei den Schlagzähmodifikatoren beschrieben, Säureanhydridgruppen enthalten und dann gegebenenfalls zusammen mit einem unfunktionalisierten Schlagzähmodifikator vorliegen. In einer weiteren Ausführungsform sind sie nicht funktionalisiert und liegen in der Formmasse in Kombination mit einem funktionalisierten Schlagzähmodifikator oder einem funktionalisierten Polyolefin vor. Der Begriff "funktionalisiert" bedeutet, dass die Polymere gemäß dem Stand der Technik mit Gruppen versehen sind, die mit den Polyamid-Endgruppen reagieren können, z. B. Säureanhydridgruppen, Carboxylgruppen, Epoxidgruppen oder Oxazolingruppen. Hierbei sind folgende Zusammensetzungen bevorzugt:
1. 50 bis 95 Gew.-Teile des Polyamids,
2. 1 bis 49 Gew.-Teile funktionalisiertes oder unfunktionalisiertes Polyolefin sowie
3. 1 bis 49 Gew.-Teile funktionalisierter oder unfunktionalisierter Schlagzähmodifikator,
wobei die Summe der Gewichtsteile der Komponenten gemäß 1., 2. und 3. 100 beträgt.

Beim Polyolefin handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-Vinylacetat-Copolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch. Das Polyamid kann in diesem Fall auch beispielsweise PA6 und/oder PA66 sein.

Darüber hinaus kann die Formmasse noch übliche Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Silikate oder Carbonate, Verstärkungsfasern wie z.B. Glasfasern, Verarbeitungshilfsmittel wie Wachse, Zinkstearat oder Calciumstearat, Flammschutzmittel wie Magnesiumhydroxid, Aluminiumhydroxid oder Melamincyanurat, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

In einer bevorzugten Ausführungsform enthält die Polyamidformmasse keinen Weichmacher. Geringe Weichmachermengen können jedoch toleriert werden. In einer möglichen Ausführungsform enthält die Polyamidformmasse dementsprechend 0,1 bis 9 Gew.-%, vorzugsweise 0,1 bis 7 Gew.-%, besonders bevorzugt 0,1 bis 5 Gew.-%, insbesondere bevorzugt 0,1 bis 4 Gew.-% und ganz besonders bevorzugt 0,1 bis 3 Gew.-% Weichmacher. Bei mehr als 9 Gew.-% Weichmacher treten Probleme wie Versteifung und Längenschrumpfung in nennenswertem Umfang auf.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure. Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Bei einer weiteren bevorzugten Ausführungsform werden vorhandene Restmonomere sowie Oligomere wie beispielsweise Dimere und Trimere vor der Compoundierung aus dem Polyamid mittels bekannter Extraktionsmittel entfernt. Bekannte Extraktionsmittel sind beispielsweise Methanol und Ethanol, aber auch überkritische Gase wie etwa Kohlendioxid. Damit stehen extrahierbare Restmonomere und -oligomere bei der späteren Anwendung im Kontakt mit überkritischen Medien nicht mehr zur Extraktion bereit, was zur Dimensionsstabilität der Polyamidschicht beiträgt.

Bei der Extrusion der Polyamidformmasse unter Bildung der Thermoplastschicht ist eine hohe Schmelzesteifigkeit erwünscht. Eine hohe Schmelzesteifigkeit geht in der Regel mit einem hohen Molekulargewicht des Polyamids und einer hohen Schmelzeviskosität einher.

Ein bekanntes Verfahren zur Herstellung solcher Polyamide ist die Festphasennachkondensation von granulierten niederviskosen Polyamiden zu hochviskosem Polyamid bei einer Temperatur, die niedriger ist als die Schmelztemperatur. Das Verfahren wird beispielsweise in der CH 359 286 sowie der US 3 821 171 beschrieben. Normalerweise wird die Festphasennachkondensation von Polyamiden in einem diskontinuierlich oder kontinuierlich arbeitenden Trockner unter Inertgas oder Vakuum durchgeführt. Diese Methode erlaubt die Herstellung von Polyamiden mit sehr hohem Molekulargewicht.

Eine andere Möglichkeit zur Herstellung von hochviskosen Polyamiden ist die kontinuierliche Nachkondensation in der Schmelze unter Einsatz verschiedenartiger Schneckenapparaturen. Die WO 2006/079890 gibt an, dass hochviskose Polyamidformmassen durch Mischen eines hochmolekularen Polyamids und eines niedermolekularen Polyamids erhalten werden können.

Darüber hinaus ist der Zugang zu hochviskosen Polyamiden bzw. Polyamidformmassen durch Einsatz aufbauender Additive möglich; geeignete Additive bzw. Verfahren sind beispielsweise in folgenden Schriften beschrieben: WO 98/47940, WO 96/34909, WO 01/66633, WO 03/066704, JP-A-01/197526, JP-A-01/236238, DE-B-24 58 733, EP-A-1 329 481, EP-A-1 518 901, EP-A-1 512 710, EP-A-1 690 889, EP-A-1 690 890 und WO 00/66650.

Die gemäß diesem Stand der Technik hergestellten Formmassen benötigen allerdings in der Regel bei der Extrusion eine sehr hohe Stromaufhahme bzw. ein sehr hohes Drehmoment und der Druck an der Düse ist sehr hoch. Darüber hinaus tritt bei den hohen Scherkräften eine wahrnehmbare Kettenspaltung auf, was zu einer Verringerung des Molekulargewichts bei der Verarbeitung führt.

Aus diesen Gründen ist es im Rahmen der Erfindung bevorzugt, dass die Polyamidformmasse erst während des Verarbeitungsvorgangs mit Hilfe eines das Molekulargewicht aufbauenden Additivs aufkondensiert wird. Gegenstand der Erfindung ist daher auch die anspruchsgemäße Verwendung einer Polyamid enthaltenden Formmasse, wobei die innere Thermoplastschicht eines Schlauchs oder Rohrs aus der Formmasse mittels folgender Verfahrensschritte hergestellt wurde:
a) Eine Formmasse wurde bereitgestellt;
b) eine Vormischung der Formmasse und eines aufbauenden Additivs, beispielsweise einer Verbindung mit mindestens zwei Carbonateinheiten, wurde hergestellt,
c) die Mischung wurde gegebenenfalls gelagert und/oder transportiert
d) die Mischung wurde unter Scherung in der Schmelze gemischt, wobei erst in diesem Schritt die Aufkondensation erfolgte;
e) die Schmelzemischung wurde extrudiert und verfestigt.

Es wurde festgestellt, dass bei dieser Zugabeweise während der Verarbeitung eine signifikante Erhöhung der Schmelzesteifigkeit eintritt, bei gleichzeitig geringer Motorlast. Somit können trotz hoher Schmelzeviskosität hohe Durchsätze bei der Verarbeitung erzielt werden, woraus eine Verbesserung der Wirtschaftlichkeit des Herstellverfahrens resultiert. Das Verfahren wird nachfolgend beispielhaft für den Fall beschrieben, bei dem das aufbauende Additiv eine Verbindung mit mindestens zwei Carbonateinheiten ist.

Bevorzugt hat das Ausgangspolyamid ein Molekulargewicht Mₙ von größer als 5000, insbesondere von größer als 8000. Hierbei werden Polyamide eingesetzt, deren Endgruppen zumindest teilweise als Aminogruppen vorliegen. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4- oder 1.3-Dimethylaminocyclohexan, 4.4'-Diaminodicyclohexylmethan, 4.4'-Diamino-3.3'-dimethyldicyclohexylmethan, 4.4'-Diaminodicyclohexylpropan, Isophorondiamin, Metaxylylendiamin oder Paraxylylendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)amin, N,N-Bis(2-aminoethyl)-N',N'bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Die Verbindung mit mindestens zwei Carbonateinheiten wird in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etheresteramid- oder -etheramideinheiten. Solche Verbindungen können durch bekannte Oligo- oder Polymerisationsverfahren bzw. durch polymeranaloge Umsetzungen hergestellt werden.
In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Die Eindosierung der als Additiv verwendeten Verbindung mit mindestens zwei Carbonateinheiten in Form eines Masterbatches ermöglicht eine genauere Dosierung des Additivs, da größere Mengen verwendet werden. Es stellte sich zudem heraus, dass durch die Verwendung eines Masterbatches eine verbesserte Extrudatqualität erzielt wird. Das Masterbatch umfasst als Matrixmaterial bevorzugt das Polyamid, das auch im erfindungsgemäßen Verfahren aufkondensiert wird, oder ein damit verträgliches Polyamid, jedoch können auch unverträgliche Polyamide unter den Reaktionsbedingungen eine partielle Anbindung an das aufzukondensierende Polyamid erfahren, was eine Kompatibilisierung bewirkt. Das als Matrixmaterial im Masterbatch verwendete Polyamid hat bevorzugt ein Molekulargewicht Mₙ von größer als 5000 und insbesondere von größer als 8000. Hierbei sind diejenigen Polyamide bevorzugt, deren Endgruppen überwiegend als Carbonsäuregruppen vorliegen. Beispielsweise liegen mindestens 80 %, mindestens 90 % oder mindestens 95 % der Endgruppen als Säuregruppen vor. Stattdessen kann aber auch ein aminoendgruppenreiches Polyetheramid als Matrixmaterial im Masterbatch eingesetzt werden. Überraschenderweise sind die Aminoendgruppen des Polyetheramids so reaktionsträge, dass sie nicht nennenswert mit der Verbindung mit mindestens zwei Carbonateinheiten reagieren. Man kann hiermit eine verbesserte Hydrolysebeständigkeit des Formteils erzielen.

Die Konzentration der Verbindung mit mindestens zwei Carbonateinheiten im Masterbatch beträgt vorzugsweise 0,15 bis 50 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise.

Geeignete Verbindungen mit mindestens zwei Carbonateinheiten sowie geeignete Masterbatches sind in der WO 00/66650, auf die hier ausdrücklich Bezug genommen wird, ausführlich beschrieben.

Die Erfindung ist anwendbar bei Polyamiden, die herstellungsbedingt mindestens 5 ppm Phosphor in Form einer sauren Verbindung enthalten. In diesem Fall wird der Polyamidformmasse vor der Compoundierung oder bei der Compoundierung 0,001 bis 10 Gew.-%, bezogen auf das Polyamid, eines Salzes einer schwachen Säure zugegeben. Geeignete Salze sind in der DE-A 103 37 707 offenbart, auf die hiermit ausdrücklich Bezug genommen wird.

Die Erfindung ist jedoch genauso gut anwendbar bei Polyamiden, die herstellungsbedingt weniger als 5 ppm Phosphor oder gar keinen Phosphor in Form einer sauren Verbindung enthalten. In diesem Fall kann zwar, muss aber nicht ein entsprechendes Salz einer schwachen Säure zugegeben werden.

Die Verbindung mit mindestens zwei Carbonateinheiten wird als solche oder als Masterbatch vorzugsweise erst nach der Compoundierung, das heißt erst nach der Herstellung der Polyamidformmasse, aber spätestens während der Verarbeitung zugegeben. Bevorzugt mischt man bei der Verarbeitung das aufzukondensierende Polyamid bzw. die aufzukondensierende Polyamidformmasse als Granulat mit dem Granulat oder Pulver der Verbindung mit mindestens zwei Carbonateinheiten oder dem entsprechenden Masterbatch. Es kann aber auch eine Granulatmischung der fertig compoundierten Polyamidformmasse mit der Verbindung mit mindestens zwei Carbonateinheiten bzw. dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden.

Anstelle der Verbindung mit mindestens zwei Carbonateinheiten kann auch jedes andere geeignete aufbauende Additiv eingesetzt werden, beispielsweise eines, das in der obengenannten Literatur offenbart ist. Geeignete Mengenverhältnisse sind auch hier 0,005 bis 10 Gew.-%, berechnet im Verhältnis zum eingesetzten Polyamid, vorzugsweise 0,01 bis 5,0 Gew.-%, besonders bevorzugt 0,05 bis 3 Gew.-%.

Überkritische Medien liegen dann vor, wenn man Flüssigkeiten oder Gase oberhalb ihres kritischen Drucks Pₖ über die kritische Temperatur Tₖ hinaus erhitzt. Im überkritischen Zustand zeichnen sich überkritische Flüssigkeiten gegenüber echten Flüssigkeiten nicht nur durch ihre geringere Dichte, viel niedrigere Viskosität und viel höhere Diffusionskoeffizienten aus, sondern vor allem durch ihre hervorragende Lösefähigkeit. Bei Kohlendioxid liegt die kritische Temperatur Tₖ bei 31,0 °C und der kritische Druck Pₖ bei 7,38 MPa. Eine genauere Beschreibung überkritischer Medien findet sich bei Kirk-Othmer, Encyclopedia of Chemical Technology, 4. Auflage, Band 23, S. 452-477.

Überkritische Medien, die erfindungsgemäß mit der Polyamidformmasse in Kontakt kommen, sind neben CO₂ beispielsweise H₂S, N₂, CH₄, Ethan, Propan, Butan, Erdgas oder Mischungen hieraus, wobei diese Aufzählung keine Beschränkung darstellt.

Die Erfindung wird beispielsweise bei der Restölgewinnung oder bei der unterirdischen Endlagerung von CO₂ in erschöpften Ölquellen, Gasquellen und dergleichen angewandt. Darüber hinaus können Gase wie CO₂, CH₄ und H₂S etwa als Erdgas bereits in der Quelle im überkritischen Zustand auftreten, bedingt durch hohe Quelltemperaturen und Drücke. Zum Beispiel können in tiefen Öl- oder Gasquellen Temperaturen von 270 °C und Drücke von 1700 bar auftreten.

Die Lebensdauer einer Ölbohrung ist ziemlich begrenzt; Sonden, die zehn Jahre lang Öl liefern, sind selten. Lässt die natürliche Produktivität einer Rohölquelle (Primärförderung) nach, so kann die Ausbeute ggf. durch Einpressen von Erdgas oder Wasser verbessert werden (Sekundärförderung). Mit den Methoden der Primär- und Sekundärförderung erreicht man jedoch nur ca. 30 % Entölung. Um auch den - früher vernachlässigten - Rest zu nutzen, der infolge zu großer Viskosität und durch Kapillarkräfte zurückgehalten wird, muss man Verfahren der Tertiärförderung ("enhanced oil recovery") anwenden. Hierfür existieren verschiedene Methoden. Die gebräuchlichste Methode ist die der Gasinjektion: Hier wird ein Gas wie beispielsweise CO₂, Erdgas oder Stickstoff in die Lagerstätte eingepresst, wo es sich im überkritischen Zustand mit dem restlichen Rohöl mischt und anschließend mit diesem zusammen gefördert wird.

Die Erfindung ist jedoch nicht auf diese Verfahren beschränkt, sondern generell dort anwendbar, wo ein Formteil aus einer Polyamidformmasse mit einem überkritischen Medium in Kontakt tritt.

## Patentansprüche

1. Verwendung eines Schlauchs oder Rohrs, deren innere Thermoplastschicht, die mit dem geförderten Medium in Kontakt steht, aus einer Formmasse besteht, die zu mindestens 50 Gew.-% folgende Bestandteile enthält:
a) 0 bis 99 Gew.-Teile Polyamid sowie
b) 1 bis 100 Gew.-Teile Polyamidelastomer, ausgewählt aus der Gruppe Polyetheresteramid, Polyetheramid und Gemische hieraus,
wobei die Summe der Gewichtsteile 100 ergibt und wobei die Formmasse maximal 9 Gew.-% Weichmacher enthält, für den Kontakt mit einem überkritischen Medium.

2. Verwendung gemäß Anspruch 1,
**dadurch gekennzeichnet,**
**dass** die Formmasse maximal 7 Gew.-% Weichmacher enthält.

3. Verwendung gemäß Anspruch 1,
**dadurch gekennzeichnet,**
**dass** die Formmasse maximal 5 Gew.-% Weichmacher enthält.

4. Verwendung gemäß Anspruch 1,
**dadurch gekennzeichnet,**
**dass** die Formmasse keinen Weichmacher enthält.

5. Verwendung gemäß einem der vorhergehenden Ansprüche,
**dadurch gekennzeichnet,**
**dass** der Schlauch einen Außendurchmesser von 30 bis 850 mm besitzt bzw. dass das Rohr einen Außendurchmesser von 30 bis 1100 mm aufweist.

6. Verwendung gemäß einem der vorhergehenden Ansprüche,
**dadurch gekennzeichnet,**
**dass** die innere Thermoplastschicht aus der Formmasse mittels folgender Verfahrensschritte hergestellt wurde:
a) Eine Polyamid enthaltende Formmasse wurde bereitgestellt;
b) eine Mischung der Formmasse und eines aufbauenden Additivs wurde hergestellt;
c) die Mischung wurde gegebenenfalls gelagert und/oder transportiert;
d) die Mischung wurde unter Scherung in der Schmelze gemischt, wobei erst in diesem Schritt die Aufkondensation erfolgte;
e) die Schmelzemischung wurde extrudiert und verfestigt.

7. Verwendung gemäß Anspruch 6,
**dadurch gekennzeichnet,**
**dass** das aufbauende Additiv eine Verbindung mit mindestens zwei Carbonateinheiten ist.

8. Verwendung gemäß einem der vorhergehenden Ansprüche,
**dadurch gekennzeichnet,**
**dass** das Polyamid vor der Compoundierung extrahiert wird, um Restmonomere sowie Oligomere zu entfernen.

9. Verwendung gemäß einem der vorhergehenden Ansprüche,
**dadurch gekennzeichnet,**
**dass** das überkritische Medium ausgewählt ist aus der Gruppe CO₂, H₂S, N₂, CH₄, Ethan, Propan, Butan, Erdgas sowie Mischungen hieraus.

10. Verwendung gemäß einem der vorhergehenden Ansprüche,
**dadurch gekennzeichnet,**
**dass** das überkritische Medium mit Rohöl vermischt ist.

11. Verwendung gemäß einem der vorhergehenden Ansprüche bei der Tertiärförderung von Rohöl oder der unterirdischen Endlagerung von CO₂.

## Claims

1. Use of a flexible pipe or rigid pipe, where each of these has an inner thermoplastics layer which is in contact with the medium conveyed and which is composed of a moulding composition that comprises at least 50% by weight of the following constituents:
a) from 0 to 99 parts by weight of polyamide, and
b) from 1 to 100 parts by weight of polyamide elastomer, selected from the group of polyetheresteramide, polyetheramide and mixtures of these,
where the total of the parts by weight is 100 and where the moulding composition comprises at most 9% by weight of plasticizer, for contact with a supercritical medium.

2. Use according to Claim 1,
**characterized in that**
the moulding composition comprises at most 7% by weight of plasticizer.

3. Use according to Claim 1,
**characterized in that**
the moulding composition comprises at most 5% by weight of plasticizer.

4. Use according to Claim 1,
**characterized in that**
the moulding composition comprises no plasticizers.

5. Use according to any of the preceding claims,
**characterized in that**
the external diameter of the flexible pipe is from 30 to 850 mm, and the external diameter of the rigid pipe is from 30 to 1100 mm.

6. Use according to any of the preceding claims,
**characterized in that**
the inner thermoplastics layer has been produced from the moulding composition by means of the following steps in a process:
a) a polyamide-containing moulding composition has been provided;
b) a mixture of the moulding composition and of an additive that increases molecular weight has been produced;
c) the mixture has, if appropriate, been stored and/or transported;
d) the mixture has been mixed in the melt, with shear, and the condensation process to increase molecular weight did not begin before this step was reached;
e) the mixture of melts has been extruded and solidified.

7. Use according to Claim 6,
**characterized in that**
the additive that increases molecular weight is a compound having at least two carbonate units.

8. Use according to any of the preceding claims,
**characterized in that**
prior to the compounding process, the polyamide is extracted, in order to remove residual monomers and to remove oligomers.

9. Use according to any of the preceding claims,
**characterized in that**
the supercritical medium has been selected from the group of CO₂, H₂S, N₂, CH₄, ethane, propane, butane, natural gas and mixtures thereof.

10. Use according to any of the preceding claims,
**characterized in that**
the supercritical medium has been mixed with crude oil.

11. Use according to any of the preceding claims in the tertiary production of crude oil or in permanent underground storage of CO₂.

## Revendications

1. Utilisation d'un tuyau ou d'un tube dont la couche thermoplastique intérieure qui est en contact avec le milieu transporté est constituée par un matériau de moulage qui contient au moins 50 % en poids des constituants suivants :
a) 0 à 99 parties en poids de polyamide et
b) 1 à 100 parties en poids d'un élastomère de polyamide, choisi dans le groupe constitué par le polyéther-ester-amide, le polyéther-amide et leurs mélanges,
la somme des parties en poids étant de 100 et le matériau de moulage contenant au plus 9 % en poids de plastifiants, pour le contact avec un milieu supercritique.

2. Utilisation selon la revendication 1, **caractérisée en ce que** le matériau de moulage contient au plus 7 % en poids de plastifiants.

3. Utilisation selon la revendication 1, **caractérisée en ce que** le matériau de moulage contient au plus 5 % en poids de plastifiants.

4. Utilisation selon la revendication 1, **caractérisée en ce que** le matériau de moulage ne contient pas de plastifiants.

5. Utilisation selon l'une quelconque des revendications précédentes, **caractérisée en ce que** le tuyau présente un diamètre extérieur de 30 à 850 mm ou **en ce que** le tube présente un diamètre extérieur de 30 à 1 100 mm.

6. Utilisation selon l'une quelconque des revendications précédentes, **caractérisée en ce que** la couche thermoplastique intérieure en le matériau de moulage a été fabriquée par les étapes de procédé suivantes :
a) un matériau de moulage contenant un polyamide a été préparé ;
b) un mélange du matériau de moulage et d'un additif adjuvant a été fabriqué ;
c) le mélange a éventuellement été entreposé et/ou transporté ;
d) le mélange a été mélangé sous cisaillement à l'état fondu, la condensation n'ayant eu lieu que dans cette étape ;
e) le mélange de masse fondue a été extrudé et solidifié.

7. Utilisation selon la revendication 6, **caractérisée en ce que** l'additif adjuvant est un composé contenant au moins deux unités carbonate.

8. Utilisation selon l'une quelconque des revendications précédentes, **caractérisée en ce que** le polyamide a été extrait avant le mélange pour éliminer les monomères résiduels et les oligomères.

9. Utilisation selon l'une quelconque des revendications précédentes, **caractérisée en ce que** le milieu supercritique est choisi dans le groupe constitué par CO₂, H₂S, N₂, CH₄, l'éthane, le propane, le butane, le gaz naturel et leurs mélanges.

10. Utilisation selon l'une quelconque des revendications précédentes, **caractérisée en ce que** le milieu supercritique est mélangé avec du pétrole brut.

11. Utilisation selon l'une quelconque des revendications précédentes lors de la récupération tertiaire de pétrole brut ou du stockage final souterrain de CO₂.
